# FASCICULE DE BREVET EUROPEEN

(11) **EP 2 000 692 B1**
(45) Date de publication et mention de la délivrance du brevet: **02.01.2013**
(21) Numéro de dépôt: 07290966.6
(22) Date de dépôt: 01.08.2007
(51) Int. Cl.: F16D 55/36, F16D 55/00

(54) **Frein adapté à un essieu conique**
An eine konische Achse angepasste Bremse
Brake adapted to a conical axle

(30) Priorité: 05.06.2007 FR 0704021
(43) Date de publication de la demande: 10.12.2008
(73) Titulaire: Messier-Bugatti-Dowty, 78140 Velizy Villacoublay (FR)
(72) Inventeur: Souetre, Jean, 92100 Boulogne (FR)
(74) Mandataire: Parzy, Benjamin Alain

(56) Documents cités:
- EP-A- 1 510 719
- EP-A- 1 653 111
- US-A- 3 480 115
- US-A- 3 977 631

## Description

L'invention concerne un frein d'aéronef particulièrement adapté à être monté sur un essieu conique.

### ARRIERE-PLAN DE L'INVENTION

On connaît des freins d'aéronef comportant une pile de disques comportant des disques rotors et des disques stators qui s'étendent coaxialement autour d'un essieu portant une roue, les disques rotors étant entraînés en rotation par la roue à freiner, tandis que les disques stators sont arrêtés en rotation sur un tube de torsion enfilé sur l'essieu. Un tel frein est connu par exemple du document EP 165311.

Dans de récents programmes, il a été proposé d'écarter les roues en vue de limiter la pression exercée par les pneumatiques sur la piste, ce qui conduit à prévoir des essieux plus longs, présentant notamment une partie amont cylindrique de grand diamètre, suivie par une partie conique, et enfin une partie aval cylindrique de plus petit diamètre recevant la roue. Un tel frein est connu par exemple du document EP 165311.

### OBJET DE L'INVENTION

L'invention a pour objet un frein particulièrement adapté à ce type d'essieu.

### BREVE DESCRIPTION DE L'INVENTION

Selon l'invention, on propose un frein d'aéronef pour freiner une roue reçue sur un essieu présentant successivement une partie amont cylindrique de grand diamètre, une partie conique, et une partie aval cylindrique de plus petit diamètre pour recevoir la roue, le frein comprenant :
- une pile de disques ;
- une pièce de structure enfilée sur l'essieu et sur laquelle sont montés les disques, la pièce de structure comportant :
   * une couronne destinée à recevoir des actionneurs de freinage et comportant une portée de centrage de la pièce de structure sur la partie cylindrique amont de l'essieu, et
   * un tube de torsion recevant les disques, le tube de torsion étant venu intégralement avec la couronne et la portée de centrage et s'étendant substantiellement dans le prolongement de la portée de centrage en regard de la partie conique de l'essieu ;
- une pièce de reprise d'effort de freinage, rapportée de façon démontable sur une extrémité libre du tube de torsion opposée à la portée de centrage.

La réalisation intégrale du tube de torsion avec la couronne permet de supprimer les boulons de solidarisation entre ces deux éléments qui, sur les freins classiques, s'étendent en général à l'intérieur du tube de torsion et éloignent donc ce dernier de l'essieu. Ce choix permet de réaliser un tube de torsion qui s'étend substantiellement dans le prolongement de la portée de centrage, donc au plus près de la partie de grand diamètre de l'essieu, ce qui permet de maximiser la hauteur des disques.

De préférence, l'extrémité libre du tube de torsion comporte une partie en saillie radiale vers l'essieu adaptée à recevoir des boulons de fixation de la pièce de reprise d'effort. Ainsi, on profite de la conicité de l'essieu et de l'espace dégagé entre le tube de torsion et l'essieu pour y placer la partie en saillie radiale s'étendant du tube vers l'essieu, et sur laquelle on vient fixer la pièce de reprise d'effort. Les boulons de solidarisation de la pièce de reprise d'effort de freinage au tube de torsion s'étendent ainsi sous le tube de torsion. Les boulons de fixation de la pièce de reprise d'effort de freinage ne subissent principalement que l'effort des actionneurs (au contraire des boulons solidarisant une couronne au tube de torsion associé qui subissent également la totalité du couple de torsion), de sorte que ces boulons sont de dimensions raisonnables et peuvent ainsi facilement prendre place entre le tube de torsion et l'essieu.

De préférence la partie en saillie radiale du tube de torsion qui s'étend vers l'essieu est une collerette, conférant au tube une rigidité augmentée.

De préférence encore, la pièce de reprise d'effort de freinage comporte une portée de centrage coopérant directement avec la partie cylindrique de ce dernier en aval de la partie conique.

### BREVE DESCRIPTION DES DESSINS

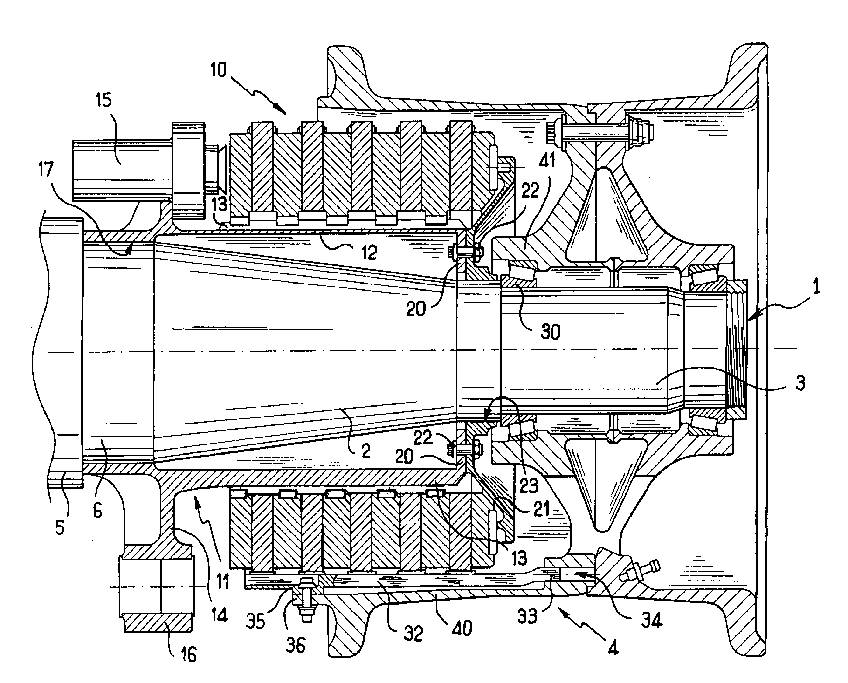

L'invention sera mieux comprise à la lumière de la description qui suit en référence à la figure unique illustrant, en coupe, un frein selon un mode particulier de réalisation de l'invention.

### DESCRIPTION DETAILLEE DE L'INVENTION

En référence à l'unique figure, le frein selon l'invention est particulièrement adapté à équiper un aéronef comportant un essieu 1 ayant une partie conique 2 avant la partie finale 3 de l'essieu qui reçoit une roue 4 équipée d'une jante 40, ici comprenant deux demi-jantes.

Ce type d'essieu se rencontre notamment lorsqu'il a été nécessaire, pour diverses raisons, notamment des problèmes de pression du pneumatique sur le sol, d'écarter les roues du centre de l'atterrisseur 5 portant l'essieu 1. Afin d'éviter de trop alourdir l'essieu, on prévoit généralement sur l'essieu 1 une partie amont 6 cylindrique de grand diamètre, une partie conique 2, et une partie aval 3 cylindrique de plus petit diamètre qui reçoit la roue 4.

On profite de la présence de la partie conique 2 pour installer un frein d'un nouveau type décrit plus en détails ci-dessous. Le frein comporte une pile de disques 10, avec alternativement des disques rotors tournant avec la roue 4 et des disques stators fixes en rotation. Les disques sont enfilés sur une pièce de structure 11 qui s'étend autour de l'essieu 1, essentiellement en regard de la partie conique 2 de l'essieu 1.

La pièce de structure 11 comprend un tube de torsion 12 sur la surface externe duquel s'étendent des clavettes ou clés 13 pour coopérer avec les disques stators afin de les empêcher de tourner (l'une d'elles est ici vue en coupe). Le tube de torsion 12 est terminé, du côté de l'atterrisseur 5, par une couronne 14 adaptée à recevoir des actionneurs de freinage 15, ici des actionneurs électromécaniques. La couronne 14 comporte une chape 16 de reprise de couple permettant, par coopération avec un toc ou une barre de reprise de couple non représentés, d'immobiliser le tube de torsion en rotation vis-à-vis de l'essieu 1. Au pied de la couronne 14 s'étend une portée 17 faisant partie intégrante de la pièce de structure 11 sur l'essieu, et coopérant avec la partie amont 6 de grand diamètre de l'essieu 1 pour centrer la pièce de structure 11 sur ce dernier. On remarquera que la couronne 14, la portée de centrage 17 et le tube de torsion 12 sont venus de matière et ne forment qu'une seule pièce. On remarquera également que le tube de torsion 12 s'étend en regard de la partie conique 2 de l'essieu 1, substantiellement dans le prolongement de la portée de centrage 17, donc au plus près de la partie conique 2.

L'extrémité libre du tube de torsion 12 opposée à la couronne 14 porte une collerette 20 qui s'étend radialement vers l'essieu 1. Cette collerette rigidifie le tube de torsion 12. Contre cette collerette 20 est rapporté une pièce de reprise d'effort de freinage 21 contre laquelle sont pressés les disques lors de l'application d'un effort par les actionneurs 15. La pièce de reprise d'effort de freinage 21 est liée de façon démontable au tube de torsion 12 au moyen de boulons 22 qui s'étendent dans la collerette 20, de sorte que ces boulons 22 s'étendent dans l'espace situé entre le tube de torsion 12 et la partie conique de l'essieu 2. On profite ainsi de cet espace, libéré par la conicité de l'essieu, pour y loger les boulons de fixation 22 de la pièce de reprise d'effort de freinage 21 au tube de torsion 11. Ces boulons sont de taille raisonnable, puisqu'ils ne subissent principalement que l'effort imposé par les actionneurs 15, et ne sont que peu soumis à la torsion générée par le freinage.

Ainsi, contrairement à la plupart des freins actuellement en service, on rend démontable non plus la couronne 14, mais la pièce de reprise d'effort de freinage 21, ce qui permet de faciliter le remplacement des disques. En effet, les disques peuvent être ici remplacés alors que le tube de torsion 12 est encore en place sur l'essieu 1. Il suffit pour cela de retirer la roue 4, puis de démonter la pièce de reprise d'effort de freinage 21 pour avoir accès aux disques.

La suppression des boulons de liaison entre la couronne 14 et le tube de torsion 12 permet de diminuer le diamètre du tube de torsion et ainsi de le rapprocher au plus près de la partie centrale cylindrique 6 de l'essieu 1. On constatera sur la figure, que l'on a tellement cherché à diminuer la diamètre de la partie cylindrique 12 du tube de torsion, dans le but d'augmenter la hauteur des disques, que le diamètre de la partie cylindrique tubulaire 12 n'est ici pas suffisamment grand pour pénétrer dans la jante 40 de la roue 4 par-dessus le moyeu 41 de celle-ci recevant les roulements à rouleaux coniques 30. Cette limitation du diamètre permet l'utilisation de disques de plus grande hauteur, au détriment toutefois du remplissage par ces mêmes disques de l'espace disponible dans la jante 40 au dessus du moyeu 41.

Dans cette configuration, il est possible, comme ici, qu'une partie des disques 10 dépasse de la jante 40 de la roue 4. Il conviendra alors de prévoir des clavettes ou clés 32 qui s'étendent suffisamment loin à l'extérieur de la jante 40 de la roue 4 pour coopérer avec les disques rotors s'étendant hors de la jante 40 de la roue 4. Ici, les clés 32 ont deux points de fixation à la jante 40 : d'une part une partie d'extrémité 33 logée dans des orifices 34 de la jante 40 de la roue 4, et d'autre part une partie 35 boulonnée à des oreilles 36 saillant extérieurement de la jante 40. Comme on le constate sur la figure, une partie substantielle des clés 32 s'étend hors de la jante 40 pour coopérer avec les disques rotors qui s'étendent à l'extérieur de la jante 40.

Ici, et conformément à un mode préféré de réalisation de l'invention, la pièce de reprise d'effort de freinage 21 comporte une portée de centrage 23 sur l'essieu 1, permettant de centrer l'extrémité associée du tube de torsion 12 sur la partie cylindrique 3 en aval de la partie conique 2 de l'essieu 1. Ainsi, la pièce de structure 11 est centrée à ses deux extrémités (par la portée de centrage 17 de la couronne et par la portée de centrage 23 de la pièce de reprise d'effort), ce qui favorise la diminution des vibrations du frein.

L'invention n'est pas limitée à ce qui vient d'être décrit, mais bien au contraire englobe toute variante entrant dans le cadre défini par les revendications.

En particulier, bien que l'on ait indiqué que l'extrémité libre du tube de torsion se termine par une collerette s'étendant radialement vers l'essieu, ce qui contribue à rigidifier le tube de torsion, on pourra plus généralement prévoir une partie en saillie radiale vers l'essieu, comme par exemple une pluralité d'oreilles pouvant recevoir chacune un boulon de fixation de la pièce de reprise d'effort de freinage au tube de torsion.

En outre, bien que l'on ait indiqué que la pièce de reprise d'effort de freinage était équipée d'une portée de centrage sur l'essieu, cette portée de centrage peut être portée par la partie en saillie du tube de torsion. On prévoira alors avantageusement un centrage de la pièce de reprise d'effort de freinage sur le tube de torsion lui-même.

Enfin, bien que l'on ait indiqué que les actionneurs sont du type électromécanique, la couronne pourra recevoir des actionneurs hydrauliques, comme des pistons hydrauliques.

## Revendications

1. Frein d'aéronef pour freiner une roue reçue sur un essieu (1) présentant successivement une partie amont (6) cylindrique de grand diamètre, une partie conique (2), et une partie aval (3) cylindrique de plus petit diamètre pour recevoir la roue, le frein comprenant :
- une pile de disques (10);
- une pièce de structure (11) apte à être enfilée sur l'essieu et sur laquelle sont montés les disques, la pièce de structure comportant :
* une couronne (14) destinée à recevoir des actionneurs de freinage (15) et comportant une portée de centrage (17) de la pièce de structure apte à coopérer avec la partie amont (6) de grand diamètre de l'essieu pour centrer la pièce de structure sur ce dernier ;
* un tube de torsion (12) recevant les disques, le tube de torsion étant venu intégralement avec la couronne et la portée de centrage; **caractérisé en ce que** la pièce de structure s'étend substantiellement dans le prolongement de la portée de centrage en regard de la partie conique de l'essieu ;
- et **en ce que** le frein comprend une pièce de reprise d'effort de freinage (21), rapportée de façon démontable sur une extrémité libre du tube de torsion opposée à la portée de centrage.

2. Frein selon la revendication 1, dans lequel l'extrémité libre du tube de torsion (12) porte une partie en saillie (20) vers l'essieu agencée pour recevoir des boulons de solidarisation (22) de la pièce de reprise d'effort de freinage (21).

3. Frein selon la revendication 1, dans lequel la pièce de reprise d'effort de freinage (21) comporte une portée de centrage (23) sur l'essieu.

4. Ensemble de roue et frein, comportant un frein selon l'une des revendications précédentes, et une roue ayant une jante (40) adaptée à coopérer avec un tel frein, dans lequel la partie cylindrique tubulaire du tube de torsion s'arrête axialement avant un moyeu (41) de la jante recevant un roulement (30) de guidage en rotation de la jante sur l'essieu.

## Claims

1. An aircraft brake for braking a wheel received on an axle (1) presenting in succession a large-diameter cylindrical upstream portion (6), a conical portion (2), and a smaller-diameter cylindrical downstream portion (3) suitable for receiving the wheel, the brake comprising:
• a stack of disks (10);
• a structural part (11) engaged on the axle and having the disks mounted thereon, the structural part comprising:
• a ring (14) for receiving braking actuators and including a centering portion (17) of the structural part that is adapted to cooperate with the large-diameter upstream portion (6) of the axle for centering the structural part on the axle;
• a torsion tube (12) receiving the disks, the torsion tube being made integrally with the ring and the centering bearing surface;
**characterized in that** the structural part extends substantially to extend the centering bearing surface in register with the conical portion of the axle; and **in that** the brake includes a braking force takeup part (21) separably fitted on a free end of the torsion tube remote from the centering bearing surface.

2. A brake according to claim 1, in which the free end of the torsion tube (12) carries a portion (20) projecting towards the axle and arranged to receive bolts (22) for securing the braking force takeup part(21).

3. A brake according to claim 1, in which the braking force takeup part (21) includes a bearing surface (23) for centering on the axle.

4. A wheel and brake assembly, comprising a brake according to claim 1 together with a wheel having a rim (40) adapted to cooperate with such a brake, in which the tubular cylindrical portion of the torsion tube stops axially before a hub (41) of the rim, the hub receiving a bearing (30) for guiding the rim in rotation on the axle.

## Patentansprüche

1. Bremse für ein Luftfahrzeug zur Bremsung eines auf einer Achse (1) aufgenommenen Rads, auf der sich nacheinander ein zylindrischer stromaufwärtiger Abschnitt (6) mit einem großen Durchmesser, ein konischer Abschnitt (2) und ein stromabwärtiger zylindrischer Abschnitt (3) mit einem kleineren Durchmesser zur Aufnahme des Rads befinden, wobei die Bremse umfasst:
- einen Stapel von Scheiben (10);
- ein Strukturteil (11), das geeignet ist, auf die Achse geschoben zu werden, und auf dem die Scheiben angebracht sind, wobei das Strukturteil umfasst:
- einen Kranz (14), der dazu bestimmt ist, Stellglieder für die Bremsung (15) aufzunehmen und der einen Zentriersitz (17) des Strukturteils aufweist, der geeignet ist, mit dem stromaufwärtigen Abschnitt (6) der Achse, der einen großen Durchmesser besitzt, zum Zentrieren des Strukturteils auf der Achse zusammenzuwirken;
- ein Torsionsrohr (12) zum Aufnehmen der Scheiben, wobei das Torsionsrohr einstückig mit dem Kranz und dem Zentriersitz ausgebildet ist; **dadurch gekennzeichnet, dass** sich das Strukturteil im Wesentlichen in Verlängerung des Zentriersitzes gegenüber dem konischen Abschnitt der Achse erstreckt und dadurch, dass die Bremse ein Bremskraftaufnahmeteil (21) umfasst, das demontierbar an einem dem Zentriersitz entgegengesetzten freien Ende des Torsionsrohrs angesetzt ist.

2. Bremse nach Anspruch 1, bei der das freie Ende des Torsionsrohrs (12) einen in Richtung der Achse vorstehenden Abschnitt (20) trägt, der zur Aufnahme von Befestigungsbolzen (22) des Bremskraftaufnahmeteils (21) ausgebildet ist.

3. Bremse nach Anspruch 1, bei dem das Bremskraftaufnahmeteil (21) einen Zentriersitz zum Zentrieren (23) auf der Achse aufweist.

4. Anordnung aus Rad und Bremse, die eine Bremse gemäß einem der vorhergehenden Ansprüche und ein Rad mit einer Felge (40) aufweist, die zum Zusammenwirken mit einer solchen Bremse ausgebildet ist, bei der der zylindrische, rohrförmige Abschnitt des Torsionsrohrs axial vor einer Nabe (41) der Felge endet, die ein Lager (30) zur Drehführung der Felge auf der Achse aufnimmt.
